# NEUE EUROPÄISCHE PATENTSCHRIFT

(11) **EP 1 791 440 B3**
(45) Veröffentlichungstag dieser Patentschrift: **12.06.2019**
(45) Hinweis auf die Patenterteilung: 12.10.2011
(21) Anmeldenummer: 05782903.8
(22) Anmeldetag: 09.08.2005
(51) Int. Cl.: A23G 3/00, A23G 3/02, A23G 3/28, G01F 11/00

(54) **VERFAHREN UND ANLAGE ZUM HERSTELLEN VON SÜSSWARENPRODUKTEN**
METHOD AND PLANT FOR THE PRODUCTION OF CONFECTIONERY
PROCEDE ET INSTALLATION POUR LA FABRICATION DE PRODUITS DE CONFISERIE

(30) Priorität: 25.08.2004 DE 102004041365
(43) Veröffentlichungstag der Anmeldung: 06.06.2007
(73) Patentinhaber: Bühler GmbH, 51580 Reichshof (DE)
(72) Erfinder: STEINER, Uwe, CH-9244 Niederuzwil (CH); KASEMANN, Karl-Jürgen, 58540 Meinerzhagen (DE); PAUL, Michael, 51702 Bergneustadt (DE)
(74) Vertreter: Hepp Wenger Ryffel AG
(86) Internationale Anmeldenummer: PCT/IB2005/052637
(87) Internationale Veröffentlichungsnummer: WO 2006/021905

(56) Entgegenhaltungen:
- EP-A- 0 328 170
- EP-A- 1 161 880
- WO-A-00/57717
- WO-A-03/089887
- DE-A1- 3 744 437
- US-A- 5 466 143
- US-A- 6 161 733
- US-A1- 2004 130 593

## Beschreibung

Die Erfindung bezieht sich auf ein Verfahren und eine Anlage zum Herstellen von Süsswarenprodukten aus mindestens einer flüssigen bis zähflüssigen Ausgangsmasse.

Bei der mindestens einen Ausgangsmasse handelt es sich um förderbare oder fliessfähige Massen auf Fettbasis wie Dunkel- oder Milchschokolade oder um zuckergussartige Massen. Solche Ausgangsmassen lassen sich bei ausreichend hoher Temperatur (Fettmassen, Schokolade) oder ausreichend hohem Wassergehalt (Zuckerguss) vergiessen und durch anschliessendes Absenken der Temperatur bzw. Trocknen verfestigen.

Derartige Anlagen zum Herstellen von Süsswarenprodukten besitzen in der Regel eine Dosiereinheit zum dosierten Zuführen der Masse an einen Dosierungsort; ein Positionierungsmittel zum Durchführen einer relativen Positionierung zwischen der Dosiereinheit und dem Dosierungsort; sowie ein Transportmittel zum An- und Abtransportieren der an den Dosierungsort dosierten Masse. Je nach Bedarf kann sich noch eine Kühleinheit anschliessen.

Um auf einer solchen Anlage ein Verfahren zum Herstellen von Süsswarenprodukten durchzuführen, bedarf es einiger Erfahrung, um ausgehend von den angestrebten Eigenschaften der zu fertigenden Süsswaren-Artikel, d.h. den Produktparametem, die Anlage richtig zu betreiben, d.h. die richtigen Prozessparameter und/oder Maschinenparameter der Anlage auszuwählen.

Aus den Druckschriften WO 00/57717 und EP 1161880 ist ausserdem das computerunterstützte Verzieren von Lebensmittelprodukten bekannt.

Die Druckschrift DE 3744437 offenbart ein Verfahren zur Steuerung einer Knet- und Mischmaschine zur automatischen Teigherstellung.

Die Druckschrift US 5 466 143 zeigt einen Teigextruder, der mit Sensoren zur Erfassung des Teiges ausgestattet ist. Der Teigausstoss ist aufgrund von Signalen, welche die Sensoren erfassen, steuerbar.

Der Erfindung liegt die Aufgabe zugrunde, diese Schwierigkeiten beim Betreiben der eingangs genannten Anlage für den weniger erfahrenen Anlagenbediener zu beseitigen und darüber hinaus auch dem erfahrenen Anlagenbediener bei der Optimierung eines Prozesses unterstützend zur Seite zu stehen.

Diese Aufgabe wird durch die Anlage gemäss Anspruch 1 und das Verfahren gemäss Anspruch 15 gelöst.

Hierzu besitzt die erfindungsgemässe Anlage:
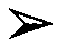 eine Dosiereinheit zum dosierten Zuführen der Masse an einen Dosierungsort;
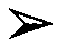 ein Positionierungsmittel zum Durchführen einer relativen Positionierung zwischen der Dosiereinheit und dem Dosierungsort;
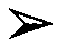 und ggf. ein Transportmittel zum An- und Abtransportieren der an den Dosierungsort dosierten Masse;
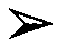 ein Eingabemittel und Anzeigemittel aufweisendes Datenverarbeitungssystem mit einem Speichermittel, einem Vergleichsmittel und einem Verfahrensparameter-Berechnungsmittel, welches den über die Eingabemittel eingebbaren Produktparametem der herzustellenden Süsswaren-Artikel Prozessparameter des Herstellungsverfahrens und/oder Maschinenparameter der Anlage nach einem vorgegebenen oder berechenbaren Schema zuordnen kann; und
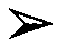 ein Stellglieder aufweisendes Steuerungssystem.

Beim erfindungsgemässen Verfahren zum Herstellen von Süsswaren-Ärtikeln aus der mindestens einen flüssigen bis zähflüssigen Masse, wobei es sich bei der mindestens einen Masse um förderbare oder fliessfähige Massen auf Fettbasis, wie Dunkel- oder Milchschokolade, oder um zuckergussartige Massen handelt, die sich bei ausreichend hoher Temperatur oder ausreichend hohem Wassergehalt vergiessen und durch anschliessendes Absenken der Temperatur bzw. Trocknen verfestigen lassen, unter Verwendung der erfindunggemässen Anlage werden
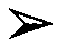 zunächst Produktparameter, die einen herzustellenden Süsswaren-Artikel definieren, über Eingabemittel eines Steuerungssystems eingegeben; und
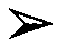 den Produktparametern werden Prozessparameter des Süsswaren-Herstellungsverfahrens und/oder Maschinenparameter der zur Herstellung verwendeten Anlage gemäss einem vorgegebenen Schema oder gemäss einer durch das Berechnungsmittel durchgeführten Berechnung zugeordnet.

Auf der Grundlage dieses Schemas oder einer durch das Berechnungsmittel durchgeführten Berechnung werden den angestrebten Produktparametern Prozessparameter und/oder Maschinenparameter für die Steuerung des Herstellungsverfahrens zugeordnet.

Der über das Eingabemittel eingebbare Produktparameter ist ausgewählt aus der Gruppe bestehend aus Dichte der Hülsen-Ausgangsmasse, Dichte der Füllungs-Ausgangsmasse, Viskosität der Hülsen-Ausgangsmasse und Viskosität der Füllungs-Ausgangsmasse sowie Kombinationen davon.

Das Steuerungssystem der erfindungsgemässen Anlage steuert unter Verwendung dieser Prozessparameter und/oder Maschinenparameter:
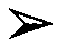 das dosierte Zuführen der Masse an einen Dosierungsort mittels einer Dosierungseinheit;
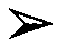 das relative Positionieren und/oder Bewegen der Dosiereinheit und des Dosierungsortes mittels eines Positionierungsmittels; und ggf.
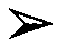 das Abtransportieren der an den Dosierungsort dosierten Masse mittels eines Transportmittels. Das Abtransportieren kann manuell oder automatisch erfolgen.

Die Erfindung vereinfacht somit die Bedienung der Anlage. Selbst ohne vertiefte Maschinenkenntnisse lässt sich die erfindungsgemässe Anlage bedienen. Der Anlagen- bzw. Maschinenbediener kann sich bei der Eingabe von Parametern in die Maschine auf Produktparameter, die den zu fertigenden Süsswaren-Artikel beschreiben, konzentrieren und muss keine Anlagen- bzw. Maschinenparameter eingeben. Die Erfindung trägt somit massgeblich zur Verbesserung der Mensch/Maschine-Schnittstelle in einer Anlage zum Herstellen von Süsswarenprodukten bei.

Vorzugsweise weist die Dosiereinheit der erfindungsgemässen Anlage eine Düse, eine Kolben/Zylinder-Einheit und ein Ventil auf, wobei das Zylindervolumen der Kolben/Zylinder-Einheit in Abhängigkeit von der Stellung des Ventils entweder mit der Massezuführung ggf. Massebehälter oder mit der Düse in Fluidverbindung steht.

Der Kolben ist entweder ein "Verschiebungskolben", der sich zwischen zwei axialen Betriebsstellungen in dem Zylinder axial verschieben lässt, oder ein "Drehkolben", der sich in dem Zylinder zwischen zwei rotativen Betriebsstellungen in dem Zylinder um die Zylinderachse verdrehen lässt. Weiterhin kann als Kolben eine Kombination aus Verschiebungs- und Drehkolben verwendet werden. Die Verwendung von anderen volumenanteils oder gewichtsanteils aufteilenden Mechanismen ist ebenfalls möglich.

Bei einer besonders bevorzugten Ausführung der Dosiereinheit erfolgt die Dosierung mittels eines Hub/Dreh-Kolbens, der in sich die Funktion des Ventils und des Druckerzeugens vereint. Dieser Hub/Dreh-Kolben weist eine Aussparung auf, so dass zwischen der Zylinderkammer, in der der Hub/Dreh-Kolben verschliessbar und verdrehbar gelagert ist, ein Dosiervolumen bestimmt wird. In einem Ansaughub des Hub/Dreh-Kolbens wird dieses Dosiervolumen vergrössert, so dass Masse in das Dosiervolumen angesaugt wird. Durch eine Drehung des Hub/Dreh-Kolbens wird die Verbindung zwischen Massezufuhr unterbrochen und dafür die Verbindung zu der Düse hergestellt. Anschliessend wird in einem Abgabehub, der entgegengesetzt zum Ausgangshub verläuft, das Dosiervolumen verkleinert, so dass die in dem Dosiervolumen enthaltene Masse aus dem Dosiervolumen heraus durch die Düse (z.B. eine Giessform) gepresst wird.

Die erfindungsgemässe Anlage kann einen mit der Dosiereinheit in Fluidverbindung stehenden Massebehälter zum Aufbewahren und Bereitstellen der flüssigen bis zähflüssigen Masse aufweisen.

Vorzugsweise wird als Dosierungsort ein vorbestimmter Dosierungsort verwendet. Insbesondere ist der Dosierungsort eine Giessform oder eine ebene Fläche, in bzw. auf die eine zähflüssige Masse gegossen wird. Die Giessform kann ein Teil der Verpackung der Süssware sein, oder sie kann eine Hohlform/Kaltstempel-Einheit sein.

Vorzugsweise weist das Positionierungsmittel ein Mittel zum Bewegen der Düse und/oder ggf. ein Mittel zum Bewegen des Dosierungsortes auf.

Zweckmässigerweise wird der Antrieb des Positionierungsmittels durch ein Stellglied gebildet, während der Antrieb des Kolbens der Kolben/Zylinder-Einheit durch mindestens ein weiteres zweites Stellglied gebildet wird. Auch der Antrieb des Ventils wird vorzugsweise durch ein weiteres Stellglied gebildet.

Bei einer besonders vorteilhaften Ausführung besitzt die erfindungsgemässe Anlage eine Süsswarenartikel-Abtastvorrichtung zum Erfassen der Form eines in ihr platzierten Süsswarenartikels, wobei die Abtastvorrichtung mit dem Speichermittel verbunden ist. Diese Abtastvorrichtung ermöglicht eine rasche Eingabe der Geometrie-Daten bzw. der konkreten Form eines angestrebten Süsswarenartikels. Insbesondere für Süsswarenartikel, die durch portioniertes Auftragen einzelner Häufchen einer ausreichend formstabilen zähflüssigen Masse gebildet werden, ist dies nützlich. Der Bediener kann dafür ein zuvor z.B. von Hand gefertigtes Modell des angestrebten Süsswarenartikels in die Abtastvorrichtung eingeben. Das Datenverarbeitungssystem der erfindungsgemässen Anlage bestimmt dann die notwendigen Maschinen- und Prozessparameter zur Herstellung dieses Süsswarenartikels.

Für das erfindungsgemässe Verfahren werden als Produktparameter mindestens einer oder Kombinationen der folgenden Parameter des Süsswaren-Artikels eingegeben: Dichte der Hülsen-Ausgangsmasse, Dichte der Füllungs-Ausgangsmasse, Viskosität der Hülsen-Ausgangsmasse, Viskosität der Füllungs-Ausgangsmasse.

Für das erfindungsgemässe Verfahren wird als Produktparameter auch eingegeben das Hülse/Füllung-Gewichtsverhältnis.

Das relative Positionieren und/oder Bewegen der Dosiereinheit und des Dosierungsortes kann derart erfolgen, dass eine Düse der Dosiereinheit am ruhenden Dosierungsort entlang einer vorbestimmten Bahn bewegt wird. Somit lassen sich z.B. aus der Masse bestehende Bänder, Kringel, Bretzel, etc. auf der Bahn giessen.

Das relative Positionieren und/oder Bewegen der Dosiereinheit und des Dosierungsortes kann auch derart erfolgen, dass eine Düse der Dosiereinheit entlang der ruhenden Oberfläche eines Süsswaren-Artikels auf einer vorbestimmten Bahn bewegt wird. Auf diese Weise lassen sich zuvor geformte Süsswaren-Artikel verzieren.

Bei einer weiteren vorteilhaften Ausführung wird bei dem erfindungsgemässen Verfahren nach dem Eingeben von Produktparameter-Kombinationen und vor dem Zuordnen von Prozessparametern und/oder Maschinenparametem die eingegebene Produktparameter-Kombination durch das Vergleichsmittel der erfindungsgemässen Anlage mit abgespeicherten unmöglichen Produktparameter-Kombinationen in dem Speichermittel verglichen, und dem Bediener wird über das Anzeigemittel angezeigt, ob eine eingegebene Produktparameter-Kombination möglich oder unmöglich ist. Dadurch wird der Bediener auf mögliche Probleme frühzeitig aufmerksam gemacht, und er erhält eine Entscheidungshilfe bei der Gestaltung des Herstellungsverfahrens für die Süsswaren-Artikel.

Vorzugsweise wird beim Eingeben einer unmöglichen Produktparameter-Kombination mindestens eine abgespeicherte mögliche alternative Produktparameter-Kombination angezeigt, die sich in möglichst wenigen Parametern von der eingegebenen unmöglichen Kombination unterscheidet. Der Bediener erhält somit Vorschläge zur-Gestaltung des Herstellungsverfahrens, wodurch dessen Optimierung erleichtert wird. Vorzugsweise ist bei den sich unterscheidenden Parametern einer unmöglichen und einer möglichen alternativen Produktparameter-Kombination die jeweilige Differenz zwischen den unterschiedlichen Parametern möglichst klein. Vorzugsweise wird die Abweichung der durch die Anlage vorgeschlagenen möglichen Parameter-Kombination von der vom Bediener vorgeschlagenen unmöglichen Parameter-Kombination durch die Standardabweichung zwischen der unmöglichen Parameter-Gruppe und der möglichen Parameter-Gruppe quantifiziert und dann minimiert. Parameter, die bei den vorgeschlagenen alternativen Produktparameter-Kombinationen nicht oder nur kaum von den ursprünglich gewünschten unmöglichen Parametern abweichen sollen, können bei dieser statistischen Auswertung über Standardabweichung und dergleichen stärker gewichtet werden als die anderen Parameter.

Wichtig ist, dass der Bediener und/oder das Datenverarbeitungssystem entscheidet, ob eine eingegebene oder eine angezeigte alternative Produktparameter-Kombination akzeptabel ist.

Zur Verzierung der Oberfläche eines Süsswaren-Artikels kann das Eingeben der geometrischen Form des Süsswaren-Artikels mittels der Süsswarenartikel-Abtastvorrichtung erfolgen, indem man den zu verzierenden Süsswaren-Artikel zum Erfassen seiner Geometrie-Daten in dieser platziert, die erfassten Geometrie-Daten in dem Speichermittel abspeichert, und die abgespeicherten Geometrie-Daten zum Ansteuern des Positionierungsmittels zum relativen Positionieren und/oder Bewegen der Dosiereinheit und des Dosierungsortes verwendet.

Das in der erfindungsgemässen Anlage verwendete Datenverarbeitungssystem mit einem Speichermittel, einem Vergleichsmittel und einem Verfahrensparameter-Berechnungsmittel, welches den über die Eingabemittel eingebbaren Produktparametem der herzustellenden Süsswaren-Artikel Prozessparameter des Herstellungsverfahrens und/oder Maschinenparameter der Anlage nach einem vorgegebenen oder berechenbaren Schema zuordnen kann, wird vorzugsweise durch ein System unscharfer Logik (Fuzzy-Logik) oder durch ein neuronales Netz gebildet. Alternativ kann auch eine Kombination aus unscharfer Logik und neuronalem Netz verwendet werden. Auf diese Weise erhält man ein lernfähiges Datenverarbeitungssystem bzw. ein Expertensystem, das ähnlich wie ein erfahrener Anlagenbediener oder Verfahrenstechnologe arbeitet.

Weitere Merkmale, Vorteile und Anwendungsmöglichkeiten der Erfindung ergeben sich aus der nun folgenden Beschreibung von Beispielen anhand der Zeichnung, wobei
Fig. 1
   ein schematisches Ablaufdiagramm des erfindungsgemässen Verfahrens zur Herstellung von Süsswaren-Artikeln zeigt;
Fig. 2
   schematisch eine efindungsgemässe Anlage zeigt;
Fig. 3
   eine schematische Darstellung eines Teils der erfindungsgemässen Anlage zeigt; und
Fig. 4
   eine schematische Darstellung eines alternativen Teils der erfindungsge mässen Anlage zeigt.

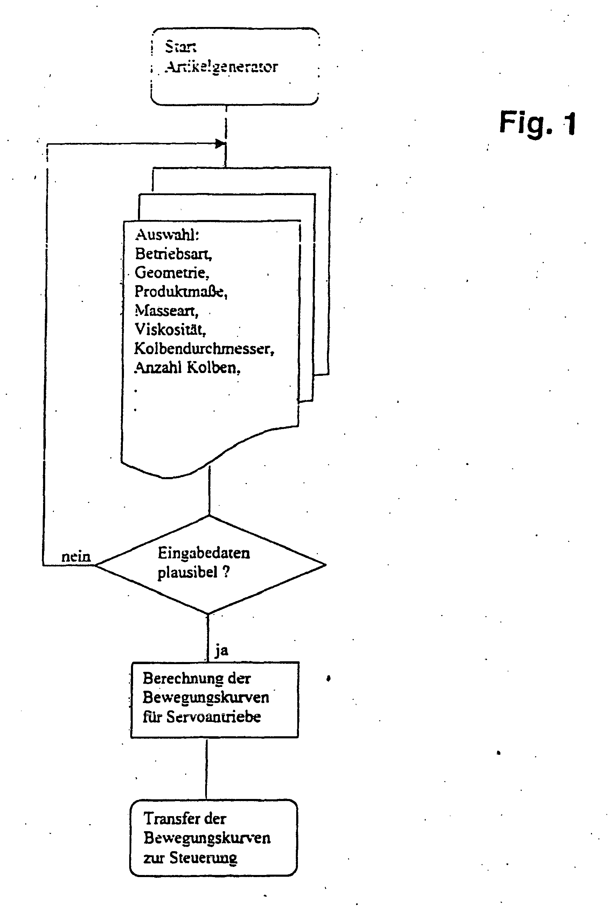

Das in Fig. 1 gezeigte und als "Artikelgenerator" bezeichnete interaktive System zur Vermittlung zwischen dem Bediener und der erfindungsgemässen Anlage arbeitet folgendermassen:

Der Bediener startet den Artikelgenerator und wird dann von dem Artikelgenerator aufgefordert, gewisse Parameter einzugeben. Dabei kommt es aber nicht unbedingt darauf an, dass der Bediener zu allen Parametern eine Eingabe macht. Lediglich für einen Teil der angezeigten Parameter ist eine Eingabe durch den Bediener erforderlich.

Die von dem Bediener eingegebene Parameter-Kombination wird von dem Artikelgenerator ausgewertet, wobei z.B. ein Vergleich mit möglichen Parameter-Kombinationen und/oder mit unmöglichen Parameter-Kombinationen erfolgt.

Wenn die eingegebene Parameter-Kombination möglich ist bzw. die Eingabedaten plausibel sind, werden die Bewegungskurven für die benötigten Servoantriebe berechnet oder aus einer abgespeicherten Vielfalt an Bewegungskurven, die den jeweiligen Parameter-Kombinationen zugeordnet sind, passend ausgewählt

Wenn die eingegebene Parameter-Kombination nicht möglich ist bzw. die Eingabedaten nicht plausibel sind, wird der Bediener erneut aufgefordert, eine abgeänderte Auswahl der gewissen Parameter einzugeben. Dies kann solange wiederholt werden, bis die eingegebene Parameter-Kombination möglich ist bzw. die Eingabedaten plausibel sind. Dieses Probierverfahren kann durch Systemvorschläge unterstützt werden (in Fig. 1 nicht dargestellt), die dem Bediener potentiell mögliche Parameter-Kombinationen aufzeigen.

Die Antriebe zum An- und/oder Abtransportieren z.B. der Formen werden nicht durch den Artikelgenerator, sondern separat angesteuert.

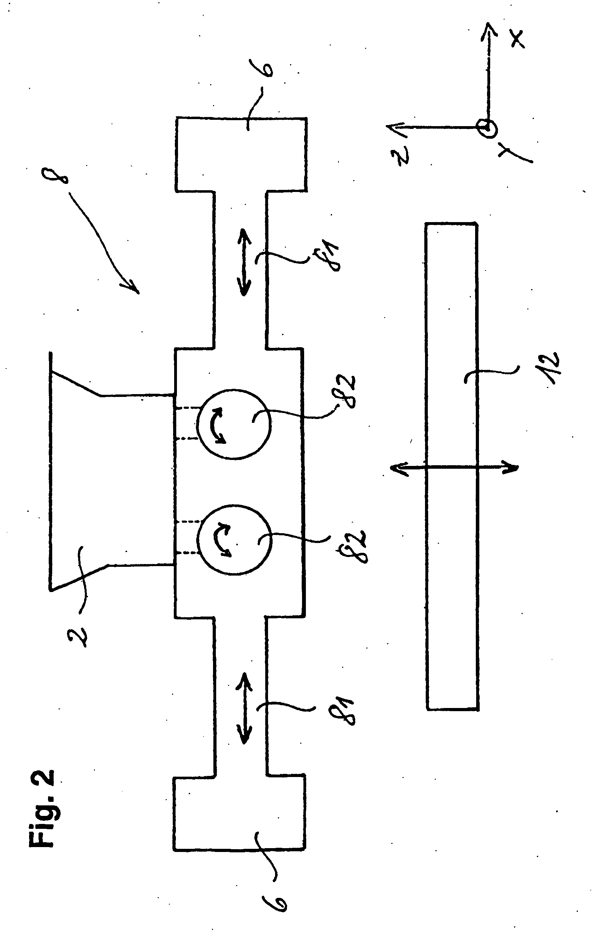

Fig. 2 zeigt schematisch eine erfindungsgemässe Anlage. Sie weist einen Massebehälter 2, einen Verfahrantrieb (nicht gezeigt), einen Kolbenantrieb 6, ein Kolbensystem 8, ein Grundgestell (nicht gezeigt) sowie einen Hubtisch 12 auf.

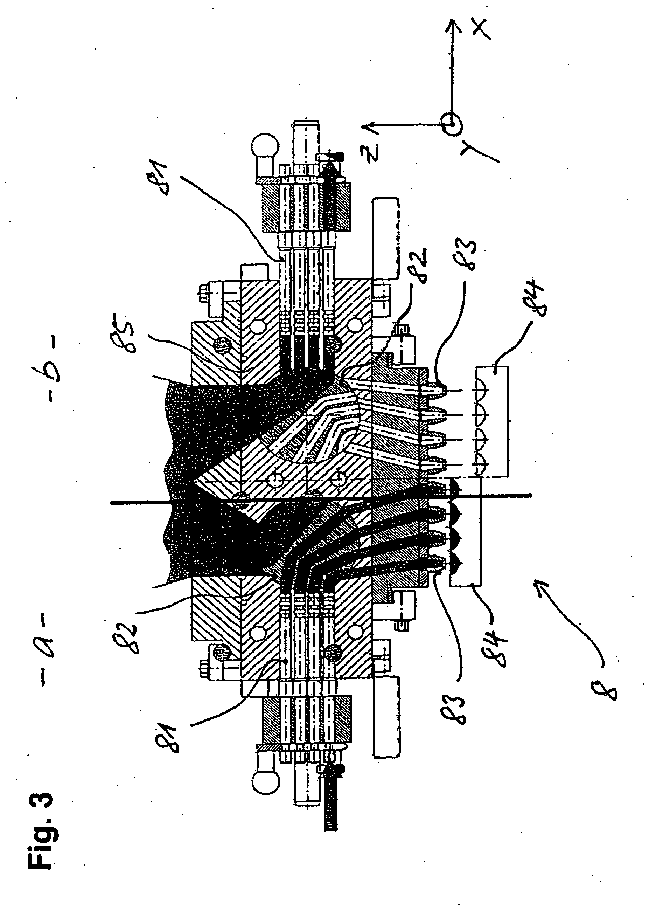

Der Massebehälter 2 dient zur Aufbewahrung und Temperierung der zu verarbeitenden Masse. Der Massebehälter 2 ist mit einem Kolbensystem 8 verbunden (siehe Fig. 3), das zur Dosierung/Portionierung der Masse und Einfüllen der Masse in Formen 84 (siehe Fig.3) dient, die auf dem Hubtisch 12 angeordnet sind. Der Verfahrantrieb dient zum Verfahren (reine Translation) der Formen 84 oder der Düsen 83 entlang von Verfahrachsen in einer x-Richtung, einer y-Richtung und einer z-Richtung. Der Kolbenantrieb 6 weist einen Verschiebungsantrieb 61 zum Antreiben von Verschiebungskolben 81 und einen Drehantrieb 62 zum Antreiben von Drehkolben 82 auf (siehe Fig. 3). Ein Hubtisch ist nicht zwingend notwendig, wenn der Verfahrantrieb der Maschine eine Verfahrachse in z-Richtung hat.

Im Betrieb wird die flüssige bis zähflüssige Masse dem Massebehälter 2 zugeführt. Von ihm aus wird sie über das Kolbensystem 8 (siehe Fig. 3) dosiert bzw. portioniert und an definierten Positionen in Giessformen abgefüllt. Alternativ könnte auch eine portionierte Abgabe kleiner Massehäufchen auf eine Unterlage (z.B. Laufband) erfolgen.

Die relative Positionierung zwischen den Düsen 83 und den Formen 84 erfolgt mittels des Verfahrantriebs in der x-Richtung und ggf. weiterer Verfahrantriebe in der y-Richtung und in der z-Richtung.

Die Portionierung/Dosierung der Masse für den jeweiligen Giessvorgang bzw. die jeweilige Häufchenbildung erfolgt mittels des Verschiebungsantriebs 61 der Verschiebungskolben 81, die somit als "Dosierkolben" wirken.

Das Umschalten zwischen der ersten Position der Drehkolben 82, in der diese mit dem Massebehälter 2 in Fluidverbindung stehen, und der zweiten Position der Drehkolben 82, in der diese mit den Düsen 83 in Fluidverbindung stehen, erfolgt mittels des Drehantriebs 62 der Drehkolben 82, die somit als "Umschaltventil" wirken.

Die in Fig. 2 gezeigte Anlage besitzt somit die folgenden Antriebe:
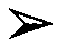 Verfahrantrieb in x-Richtung zur relativen Positionierung Düse/Form
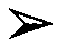 Verfahrantrieb in y-Richtung zur relativen Positionierung Düse/Form
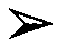 Verfahrantrieb in z-Richtung zur relativen Positionierung Düse/Form
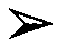 Verschiebungsantrieb (Dosierkolben-Antrieb)
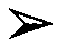 Drehantrieb (Umschaltventil-Antrieb).

Fig. 3 ist eine ausführlichere Darstellung des Kolbensystems 8 entlang einer Schnittebene senkrecht zur Drehachse des Drehantriebs des Drehkolbens 82. Die Verschiebungskolben 81 und die Drehkolben 82 sind in einem Kolbengehäuse 85 gelagert.

Auf der linken Seite der Fig. 3 befinden sich vier Verschiebungskolben (Dosierkolben) 81 in einer dem Drehkolben (Umschaltventil) 82 angenäherten Position. Gleichzeitig befindet sich einer der Drehkolben 82 in der Position, in der die jeweiligen Zylindervolumina der vier Verschiebungskolben 81 jeweils mit den Düsen 83 in Fluidverbindung stehen. Der Drehkolben 82 besitzt vier Kanäle, die in dieser Position jeweils diese Fluidverbindung herstellen.

Der in Fig. 3 links abgebildete Zustand des Kolbensystems 8 entspricht dem Ende des Dosierhubs der Dosierkolben 81. Die Formen 84 sind in diesem Zustand mit Masse gefüllt und können mittels des Transportmittels zum An- und Abtransportieren der Formen weitergeführt werden.

Auf der rechten Seite der Fig. 3 befinden sich die vier Verschiebungskolben (Dosierkolben) 81 in einer vom Drehkolben (Umschaltventil) 82 entfernten Position. Gleichzeitig befindet sich der Drehkolben 82 in der Position, in der die jeweiligen Zylindervolumina der vier Verschiebungskolben 81 jeweils mit dem Massebehälter 2 in Fluidverbindung stehen.

Der in Fig. 3 rechts abgebildete Zustand des Kolbensystems 8 zeigt eine Momentaufpahme des Ansaugens von Masse aus dem Massebehälter 2 in die Zylindervolumina der Dosierkolben 81. Die Formen 84 sind in diesem Zustand noch nicht mit Masse gefüllt.

Die Bewegung des Drehkolbens 82 in die Position, in der die Fluidverbindung zwischen dem Massebehälter 2 und den Düsen 83 hergestellt wird, und der Dosierhub des Verschiebungskolbens 81 zur Eindosierung von Masse in die Formen stehen kurz bevor.

Die erfindungsgemässe Anlage ermöglicht die folgenden Verfahrensarten:
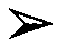 Punktguss in stehende oder bewegte Form
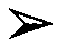 Bandguss in stehende oder bewegte Form
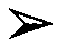 One-Shot-Punktguss in stehende oder bewegte Form
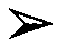 One-Shot-Bandguss in stehende oder bewegte Form
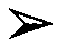 Füllen/Deckeln bei Punktguss in stehende oder bewegte Form
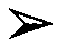 Füllen/Deckeln bei Bandguss in stehende oder bewegte Form
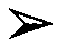 Dekorieren
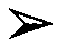 Dressieren.

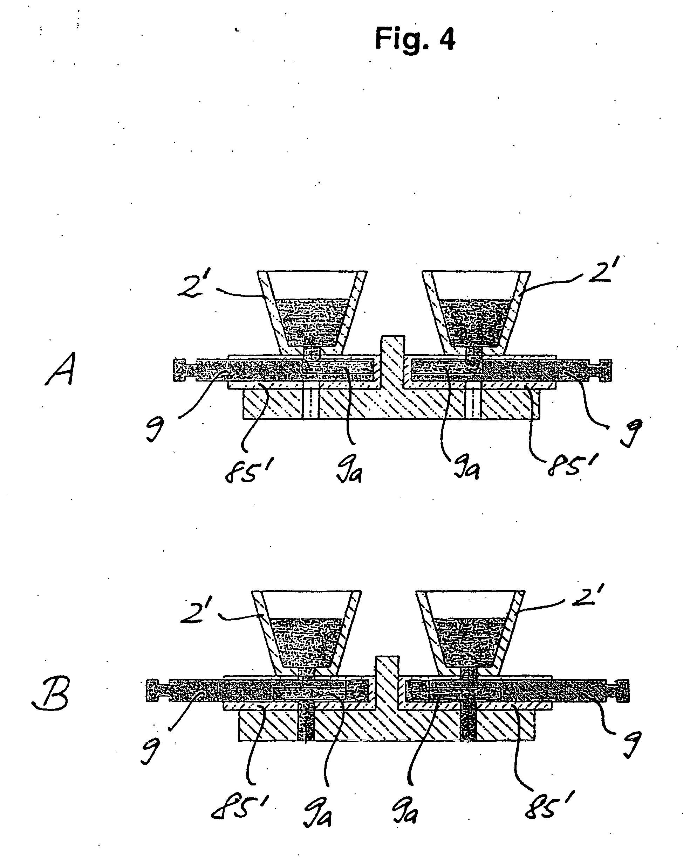

Fig. 4A und 4B zeigen eine zur Fig. 3 alternative Ausführung der Dosiereinheit. Die Dosiereinheit enthält in doppelter Ausführung einen Massebehälter 2, ein Kolbengehäuse 85' und einen Hub/Dreh-Kolben 9, der eine Kombination aus Hubkolben und Drehventil darstellt. Der Hub/Dreh-Kolben 9 ist in dem Kolbengehäuse 85' axial verschiebbar und um die Verschiebungsachse drehbar gelagert. Ausserdern weist der Hub/Dreh-Kolben 9 eine Aussparung 9a auf, so dass zwischen dem Kolbengehäuse 85' und dem Hub/Dreh-Kolben ein Dosiervolumen bestimmt wird.

Fig. 4A zeigt den Beginn eines Ansaughubes, bei dem der Hub/Dreh-Kolben 9 in dem Kolbengehäuse 85' derart verschoben wird, dass der Hohlraum zwischen der Aussparing 9a und dem Kolbengehäuse 85' vergrössert wird.

Fig. 4B zeigt den Beginn eines Dosierhubes, bei dem der Hub/Dreh-Kolben 9 in dem Kolbengehäuse 85' entgegengesetzt zum Ansaughub derart verschoben wird, dass der Hohlraum zwischen der Aussparung 9a und dem Kolbengehäuse 85' verkleinert wird.

Am Ende des Ansaughubes (nicht gezeigt) wird der Hub/Dreh-Kolben um seine Längsachse bzw. Drehachse um 180° gedreht, wodurch er in die in Fig. 4B gezeigte Stellung gelangt.

Das während des Dosierhubes zu der Düse (nicht gezeigt)! geförderte Massevolumen entspricht der Differenz zwischen dem minimalen Hohlraumvolumen (siehe Fig. 4A) zu Beginn des Ansaughubes und dem maximalen Hohlraumvolumen (siehe Fig. 4B) am Ende des Ansaughubes bzw. zu Beginn des Dosierhubes. Die zwischen dem Ende des Ansaughubes und dem Beginn des Dosierhubes erfolgende Drehung des Hub/DrehKolbens 9 verändert im vorliegenden Beispiel das Hohlraumvolumen nicht, sondern stellt nur eine Umschaltung von der Fluidverbindung zwischen dem Massebehälter 2 und dem Hohlraumvolumen zu der Fluidverbindung zwischen dem Massebehälter 2 und der Düse dar.

Beim One-Shot-Verfahren werden in einem einzigen Dosiervorgang gefüllte Artikel hergestellt. Hierfür verwendet man eine spezielle Düse und eine spezielle Hohlform. Die Düse weist einen mittigen Kanal für Füllungsmasse und einen den mittigen Kanal umgebenden Ringkanal für Hülsenmasse auf. Mittels eines einzigen "Schusses" werden gleichzeitig Füllungsmasse und Hülsenmasse durch diese Düse in eine speziell ausgebildete Hohlform eingedüst. Die Geometrie der Düse und der Hohlform sowie die Dynamik des Eindüsens sind so aufeinander abgestimmt, dass sich die Hülsenmasse (beim One-Shot-Punktguss) vollständig um die Füllungsmasse herum verteilt, wodurch ein gefüllter Artikel gebildet wird.

Beim Punktguss in eine stehende Form wählt der Bediener eine vorab definierte geometrische Form für den herzustellenden Süsswaren-Artikel aus. Als Produktparameter werden dann Radius, Halbachsen etc. vom Bediener über das Eingabemittel eingegeben. Auch weitere Produktparameter wie Dichte und Viskosität der Masse können eingegeben werden.

Hieraus berechnet das Berechnungsmittel entsprechende Verfahrensparameter, wie z.B. die Dosiermenge, die Geschwindigkeit der Dosierung durch den mindestens einen Verschiebungskolben 81 sowie die Bewegung der Formen 84 in vertikaler Richtung bzw. entlang der z-Achse, oder es trifft aus einer Vielfalt vorgegebener Zuordnungen zwischen Produktparametem und Verfahrensparametern eine Auswahl möglicher Kombinationen von Verfahrensparametern.

Beim Bandguss in eine stehende Form wählt der Bediener ebenfalls eine vorab definierte geometrische Form für den herzustellenden Artikel aus. Als Produktparameter werden dabei z.B. Länge, Breite, Höhe oder Länge und Radius oder Länge und Halbachsen für einen quaderförmigen, einen kreiszylindrischen bzw. eine elliptisch zylindrischen Riegel ausgewählt. Wiederum können weitere Produktparameter wie Dichte und Viskosität der Masse eingegeben werden.

Hieraus berechnet das Berechnungsmittel entsprechende Verfahrensparameter, wie z.B. die Dosiermenge, die Geschwindigkeit der Dosierung durch den mindestens einen Verschiebungskolben 81 sowie die Bewegung der Formen 84 in vertikaler Richtung bzw. entlang der z-Achse und in horizontaler Längsrichtung bzw. entlang der x-Achse und/oder y-Achse, oder es trifft wiederum aus einer Vielfalt vorgegebener Zuordnungen zwischen Produktparametem und Verfahrensparametern eine Auswahl möglicher Kombinationen von Verfahrensparametern.

Beim One-Shot-Punktguss in eine stehende Form wählt der Bediener ebenfalls eine vorab definierte geometrische Form für den herzustellenden gefüllten Artikel aus: Für eine gefüllte Kugel werden z.B. der Radius der Kugel und die Dicke der Hülse eingegeben. Wiederum können weitere Produktparameter wie Dichte und Viskosität der Hülsenmasse und der Füllungsmasse eingegeben werden.

Hieraus berechnet das Berechnungsmittel entsprechende Verfahrensparameter, wie z.B. die Dosiermenge, die Geschwindigkeit der Dosierung durch die beiden Verschiebungskolben 81 sowie die Bewegung der Formen 84 in vertikaler Richtung bzw. entlang der z-Achse.

Beim One-Shot-Bandguss in eine stehende Form wählt der Bediener ebenfalls eine vorab definierte geometrische Form für den herzustellenden gefüllten Artikel aus. Für einen gefüllten Riegel werden z.B. die Länge, die Breite und die Höhe des Riegels sowie die Dicke der Hülse eingegeben. Wiederum können weitere Produktparameter wie Dichte und Viskosität der Hülsenmasse und der Füllungsmasse eingegeben werden.

Hieraus berechnet das Berechnungsmittel entsprechende Verfahrensparameter, wie z.B. die Dosiermenge der Füllungsmasse und der Hülsenmasse, die jeweilige Geschwindigkeit der Dosierung der Füllungsmasse und der Hülsenmasse durch die beiden Verschiebungskolben 81 sowie die Bewegung der Formen 84 in vertikaler Richtung bzw. entlang der z-Achse und in der horizontalen Längsrichtung bzw. entlang der x-Achse und/oder y-Achse.

Beim Punktguss, Bandguss, One-Shot-Punktguss und One-Shot-Bandguss in eine jeweils bewegte Form entsprechen die Verfahrensparameter denen der jeweiligen Gussart in die stehende Form. Der zeitliche Verlauf der Bewegung in der horizontalen Längsrichtung bzw. entlang der x-Achse (Verfahrkurve für die x-Achse) wird dann durch ein nachgeordnetes Steuerungssystem vorgegeben.

Bei den vorgenannten Gussarten kann die Eingabe der geometrischen Produktparameter auch durch eine Süsswarenartikel-Abtastvorrichtung erfolgen, indem dieser ein geometrisches Modell des herzustellenden Artikels zugeführt wird und dessen Abmessungen abgetastet und abgespeichert werden.

Beim Dekorieren können vorgegebene Muster und/oder Schriftzüge eingegeben werden.

Wenn es sich beim Dekorieren um einen Schriftzug und/oder ein Muster auf einer ebenen Fläche eines Süsswaren-Artikels handelt, erfolgt die Eingabe über ein Schreibtablett oder mittels einer Maus.

Hieraus berechnet das Berechnungsmittel entsprechende Verfahrensparameter, wie z.B. die Dosiermenge der Dekorationsmasse, die jeweilige Geschwindigkeit der Dosierung der Dekorationsmasse durch jeweils mindestens einen Verschiebungskolben 81 sowie die Bewegung der Süsswaren-Artikel in vertikaler Richtung bzw. entlang der z-Achse, in der horizontalen Längsrichtung bzw. entlang der x-Achse und entlang der horizontalen Querrichtung bzw. entlang der y-Achse. Hieraus wird zunächst die Weglänge der Dekorationskurve und daraus wiederum die Bewegung des Dosierkolbens berechnet.

Wenn es sich beim Dekorieren um einen Schriftzug auf einer nicht-ebenen Fläche eines Süsswaren-Artikels (z.B. Nikolaus oder Osterhase) handelt, erfolgt die Eingabe der vertikalen Projektion (x-Koordinaten und y-Koordinaten) der Dekoration ebenfalls über ein Schreibtablett oder mittels einer Maus. Zusätzlich soll muss dann noch für die einzelnen Punkte dieser Projektion die jeweilige Höhe (z-Koordinate) z.B. manuell eingegeben werden.

Bei der vorgenannten Dekorationsart kann die Eingabe der geometrischen Produktparameter des Musters und/oder des Schriftzuges auch durch eine Süsswarenartikel-Abtastvorrichtung erfolgen, die einen Taststift aufweist, mit dem die nicht-ebene Oberfläche des Artikels oder eines Modells dieses Artikels entlang des anzubringenden Musters und/oder Schriftzuges abgetastet wird. Auf diese Weise wird eine Kurve im Raum bzw. auf der nicht-ebenen Oberfläche des Artikels erfasst. Diese geometrische Kurveninformation wird dann in dem Speichermittel abgespeichert.

Hieraus berechnet das Berechnungsmittel wiederum die entsprechenden Verfahrensparameter, wie z.B. die Dosiermenge der Dekorationsmasse, die jeweilige Geschwindigkeit der Dosierung der Dekorationsmasse durch jeweils mindestens einen Verschiebungskolben 81 sowie die Bewegung des jeweiligen Süsswaren-Artikels oder der Düse in vertikaler Richtung bzw. entlang der z-Achse, in der horizontalen Längsrichtung bzw. entlang der x-Achse und entlang der horizontalen Querrichtung bzw. entlang der y-Achse. Hieraus wird zunächst die Weglänge der Dekorationskurve und daraus wiederum die Bewegung des Dosierkolbens berechnet.

## Patentansprüche

1. Anlage zum Herstellen von Süsswaren-Artikeln aus mindestens einer flüssigen bis zähflüssigen Ausgangsmasse oder Massen mit Ingredienzien, wobei die Anlage aufweist :
- eine Massezuführungseinheit zur Dosierung zum Bereitstellen ggf. Aufbewahren der Masse
- eine Dosierenheit (8) zum dosierten Zuführen der Masse an einen Dosierungsort;
- ein Positionierungsmittel (4) zum Durchführen einer relativen Positionierung zwischen der Dosiereinheit und dem Dosierungsort;
- ein Transportmittel zum Abtransportieren der an den Dosierungsort dosierten Masse;
- ein Eingabemittel und Anzeigemittel aufweisendes Datenverarbeitungssystem mit einem Speidhermittel, einem Vergleichsmittel und einem Verfahrensparameter-Berechnungsmittel, welches den über die Eingabemittel eingebbaren Produktparametern der herzustellenden Süsswaren-Artikel Prozessparameter des Herstellungsverfahrens und/oder Maschinenparameter der Anlage nach einem vorgegebenen oder berechenbaren Schema zuordnen kann, und
- ein Stellglieder aufweisendes Steuerungssystem;
**dadurch gekennzeichnet, dass**
der über das Eingabemittel eingebbare Produktparameter ausgewählt ist aus der Gruppe bestehend aus
- Dichte der Hülsen-Ausgangsmasse
- Dichte der Füllungs-Ausgangsmasse
- Viskosität der Hülsen-Ausgangsmasse
- Viskosität der Füllungs-Ausgangsmasse
sowie Kombinationen davon.

2. Anlage nach Anspruch 1
**dadurch gekennzeichnet, dass** ein zusätzlicher über das Eingabemittel eingebbarer Produktparameter das Hülse/Füllung-Gewichtsverhältnis ist
und wobei
die Anlage derart ausgelegt ist, dass die vom Bediener eingegebene Parameter-Kombination von dem Artikelgenerator ausgewertet wird, wobei ein Vergleich mit möglichen Parameter Kombinationen und/oder unmöglichen Parameter-Kombinationen erfolgt.

3. Anlage nach Anspruch 1 oder 2, **dadurch gekennzeichnet, dass** die Anlage derart ausgebildet ist,
dass beim Eingeben einer unmöglichen Produktparameter-Kombination mindestens eine abgespeicherte mögliche alternative Produktparameter-Kombination angezeigt wird, wobei
- die angezeigte mögliche Produktparameterkombination sich in möglichst wenigen Parametern von der eingegebenen unmöglichen Kombination unterscheidet oder
- bei den sich unterscheidenden Parametern der unmöglichen und der angezeigten möglichen alternativen Produktparameter-Kombination die jeweilige Differenz zwischen den unterschiedlichen Parametern möglichst klein ist oder
- die Abweichung der durch die Anlage vorgeschlagenen möglichen Parameter-Kombination von der vom Bediener vorgeschlagenen unmöglichen Parameter-Kombination durch die Standardabweichung zwischen der unmöglichen Parameter-Gruppe und der möglichen Parameter Gruppe quantifiziert wird und dann minimiert wird.

4. Anlage nach Anspruch 1 oder 2, **dadurch gekennzeichnet, dass** die Dosiereinheit (8) eine Düse (83), eine Kolben/ZylinderEinheit (81) und ein Ventil (82) aufweist, wobei das Zylindervolumen der Kolben/Zylinder-Einheit in Abhängigkeit von der Stellung des Ventils entweder mit der Dosiereinheit oder mit der Düse in Fluidverbindung steht.

5. Anlage nach Anspruch 1, 2, 3 oder 4, **dadurch gekennzeichnet, dass** sie einem mit der Dosiereinheit in Fluidverbindung stehenden Massebehälter zum Aufbewahren und Bereitstellen der flüssigen bis zähflüssigen Masse aufweist.

6. Anlage nach einem der Ansprüche 1 bis 5, **dadurch gekennzeichnet, dass** der Dosierungsort ein vorbestimmter Dosierungsort ist.

7. Anlage nach Anspruch 6, **dadurch gekennzeichnet, dass** der Dosierungsort eine Giessform ist.

8. Anlage nach Anspruch 7; **dadurch gekennzeichnet, dass** die Giessform ein Teil der Verpackung der Süssware ist.

9. Anlage nach einem der Ansprüche 1 bis 4, **dadurch gekennzeichnet, dass** der Dosierungsort eine Hohlform/Kaltstempel-Einheit ist.

10. Anlage nach einem der Ansprüche 1 bis 9, **dadurch gekennzeichnet, dass** das Positionierungsmittel ein Mittel zum Bewegen der Düse und/oder ein Mittel zum Bewegen des Dosierungsortes aufweist.

11. Anlage nach einem der Ansprüche 1 bis 10, **dadurch gekennzeichnet, dass** ein erstes Stellglied der Antrieb des Positionierungsmittels ist.

12. Anlage nach einem der Ansprüche 4 bis 11, **dadurch gekennzeichnet, dass** ein zweites Stellglied der Antrieb des Kolbens der Kolben/Zylinder-Einheit ist.

13. Anlage nach einem der Ansprüche 4 bis 12, **dadurch gekennzeichnet, dass** ein Stellglied der Antrieb des Ventils ist.

14. Anlage nach einem der Ansprüche 1 bis 13, **dadurch gekennzeichnet, dass** sie eine Süsswarenartikel-Abtastvorrichtung zum Erfassen der Form eines in ihr platzierten Süsswarenartikels aufweist, wobei die Abtastvorrichtung mit dem Speichermittel verbunden ist.

15. Verfahren zum Herstellen von Süsswaren-Artikeln aus mindestens einer flüssigen bis zähflüssigen Masse oder Massen mit Ingredienzien, wobei es sich bei der mindestens einen Masse um förderbare oder fliessfähige Massen auf Fettbasis, wie Dunkel- oder Milchschokolade, oder um zuckergussartige Massen handelt, die sich bei ausreichend hoher Temperatur oder ausreichend hohem Wassergehalt vergiessen und durch anschliessendes Absenken der Temperatur bzw. Trocknen verfestigen lassen, unter Verwendung einer Anlage gemäss einem der Ansprüche 1 bis 14, bei welchem:
a. zunächst Produktparameter, die einen herzustellenden Süsswaren-Artikel definieren, über Eingabemittel eines Steuerungssystems eingegeben werden; und
b. den Produktparametern Prozessparameter des Süsswaren-Herstellungsverfahrens und/oder Maschinenparameter der zur Herstellung verwendeten Anlage gemäss einem vorgegebenen Schema oder gemäss einer durch das Berechnungsmittel durchgeführten Berechnung zugeordnet werden;
und wobei als Produktparameter mindestens einer oder Kombinationen der folgenden Parameter des Süsswaren-Artikels eingegeben werden:
- Dichte der Hülsen-Ausgangsmasse
- Dichte der Füllungs-Ausgangsmasse
- Viskosität der Hülsen-Ausgangsmasse
- Viskosität der Füllungs-Ausgangsmasse.

16. Verfahren nach Anspruch 15, wobei zusätzlich Produktparameter eingegeben wird das
Hülse/Füllung-Gewichtsverhältnis
und
die vom Bediener eingegebene Parameter-Kombination von dem Artikelgenerator ausgewertet wird, wobei ein Vergleich mit möglichen Parameter Kombinationen und/oder unmöglichen Parameter-Kombinationen erfolgt.

17. Verfahren nach Anspruch 15 oder 16, **dadurch gekennzeichnet, dass**
beim Eingeben einer unmöglichen Produktparameter-Kombination mindestens eine abgespeicherte mögliche alternative Produktparameter-Kombination angezeigt wird, wobei
- die angezeigte mögliche Produktparameterkombination sich in möglichst wenigen Parametern von der eingegebenen unmöglichen Kombination unterscheidet oder
- bei den sich unterscheidenden Parametern der unmöglichen und der angezeigten möglichen alternativen Produktparameter-Kombination die jeweilige Differenz zwischen den unterschiedlichen Parametern möglichst klein ist oder
- die Abweichung der durch die Anlage vorgeschlagenen möglichen Parameter-Kombination von der vom Bediener vorgeschlagenen unmöglichen Parameter-Kombination durch die Standardabweichung zwischen der unmöglichen Parameter-Gruppe und der möglichen Parameter Gruppe quantifiziert wird und dann minimiert wird.

18. Verfahren nach Anspruch 15, 16 oder 17, **dadurch gekennzeichnet, dass** das relative Positionieren und/oder Bewegen der Dosiereinheit und des Dosierungsortes derart erfolgt, dass eine Düse der Dosiereinheit am ruhenden Dosierungsort entlang einer vorbestimmten Bahn bewegt wird.

19. Verfahren nach einem der Ansprüche 15 bis 18, **dadurch gekennzeichnet, dass** das relative Positionieren und/oder Bewegen der Dosiereinheit und des Dosierungsortes derart erfolgt, dass eine Düse der Dosiereinheit entlang der ruhenden Oberfläche eines Süsswaren-Artikels auf einer vorbestimmten Bahn bewegt wird.

20. Verfahren nach Anspruch 16, **dadurch gekennzeichnet, dass** nach dem Eingeben von Produktparameter-Kombinationen und vor dem Zuordnen von Prozessparametern und/oder Maschinenparametern die eingegebenen Produktparameter-Kombination durch das Vergleichsmittel mit abgespeicherten unmöglichen Produktparameter-Kombinationen in dem Speichermittel verglichen wird und dem Bediener über das Anzeigemittel angezeigt wird, ob eine eingegebene Produktparameter-Kombinatiön möglich oder unmöglich ist.

21. Verfahren nach einem der Ansprüche 15 bis 20, **dadurch gekennzeichnet, dass** der Bediener und/oder das Datenverarbeitungssystem entscheidet, ob eine eingegebene oder eine angezeigte alternative Produktparameter-Kombination akzeptabel ist.

22. Verfahren nach einem der Ansprüche 15 bis 21, zur Verzierung der Oberfläche eines Süsswaren-Artikels, **dadurch gekennzeichnet, dass** das Eingeben der geometrischen Form des Süsswaren-Artikels mittels einer Süsswarenartikel-Abtastvorrichtung erfolgt, indem man den zu verzierenden Süsswaren-Artikel zum Erfassen seiner Geometrie-Daten in dieser platziert, die erfassten Geometrie-Daten in dem Speichermittel abspeichert, und die abgespeicherten Geometrie-Daten zum Ansteuern des Positionierungsmittels zum relativen Positionieren und/oder Bewegen der Dosiereinheit und des Dosierungsortes verwendet.

## Claims

1. Plant for producing confectionery articles from at least one fluid to viscous starting substance or substances with ingredients, the plant having the following:
- a substance feed unit for metering, for providing and optionally storing the substance;
- a metering unit (8) for the metered feeding of the substance to a metering location;
- a positioning means (4) for carrying out relative positioning between the metering unit and the metering location;
- a transport means for transporting away the substance which is metered to the metering location;
- a data processing system which has an input means and display means, with a memory unit, a comparison unit and a method-parameter calculating unit which can assign process parameters of the production method and/or machine parameters of the plant according to a formula which is predefined or can be calculated to the product parameters of the confectionery articles to be produced, which product parameters can be input via the input means; and
- a control system which has actuators; **characterized in that** the product parameter which can be input via the input means is selected from the group comprising
- density of the shell starting substance
- density of the filling starting substance
- viscosity of the shell starting substance
- viscosity of the filling starting substance and combinations thereof.

2. Plant according to Claim 1, **characterized in that** an additional product parameter which can be input via the input means is the shell/filling weight ratio, and the plant being designed in such a way that the parameter combination which is input by the operator is evaluated by the article generator, wherein a comparison being carried out with possible parameter combinations and/or impossible parameter combinations.

3. Plant according to Claim 1 or 2, **characterized in that** the plant is configured in such a way that, if an impossible product parameter combination is input, at least one stored possible alternative product parameter combination is displayed, the displayed possible product parameter combination differing from the input impossible combination in as few parameters as possible, or,
in the case of the differing parameters of the impossible and the displayed possible alternative product parameter combinations, the respective difference between the different parameters being as small as possible, or
the deviation of the possible parameter combination which is proposed by the plant from the impossible parameter combination which is proposed by the operator being quantified by the standard deviation between the impossible parameter group and the possible parameter group and then being minimized.

4. Plant according to Claim 1 or 2, **characterized in that** the metering unit (8) has a nozzle (83), a piston/cylinder unit (81) and a valve (82), the cylinder volume of the piston/cylinder unit being in fluid connection either with the metering unit or with the nozzle as a function of the position of the valve.

5. Plant according to Claim 1, 2, 3 or 4, **characterized in that** it has a substance container which is in fluid connection with the metering unit, for storing and providing the fluid to viscous substance.

6. Plant according to one of Claims 1 to 5, **characterized in that** the metering location is a predefined metering location.

7. Plant according to Claim 6, **characterized in that** the metering location is a pouring mould.

8. Plant according to Claim 7, **characterized in that** the pouring mould is part of the packaging of the confectionery.

9. Plant according to one of Claims 1 to 4, **characterized in that** the metering location is a hollow mould/cold ram unit.

10. Plant according to one of Claims 1 to 9, **characterized in that** the positioning means has a means for moving the nozzle and/or a means for moving the metering location.

11. Plant according to one of Claims 1 to 10, **characterized in that** a first actuator is the drive of the positioning means.

12. Plant according to one of Claims 4 to 11, **characterized in that** a second actuator is the drive of the piston of the piston/cylinder unit.

13. Plant according to one of Claims 4 to 12, **characterized in that** one actuator is the drive of the valve.

14. Plant according to one of Claims 1 to 13, **characterized in that** it has a confectionery-article sensing apparatus for detecting the shape of a confectionery article which is placed in it, the sensing apparatus being connected to the memory unit.

15. Method for producing confectionery articles from at least one fluid to viscous substance or substances with ingredients, the at least one mass being conveyable or flowable masses on fat basis, such as dark chocolate or milk chocolate, or sugar-cast masses which can be poured at a sufficiently high temperature or sufficiently high water content and can be solidified by subsequent lowering of the temperature or drying, using a plant according to one of Claims 1 to 14, in which method:
a. first of all product parameters which define a confectionery article to be produced are input via input means of a control system; and
b. the product parameters are assigned process parameters of the confectionery production method and/or machine parameters of the plant which is used for production, according to a predefined formula or according to a calculation which is performed by the calculation unit;
and at least one or a combination of the following parameters of the confectionery article being input as product parameters:
- density of the shell starting substance
- density of the filling starting substance
- viscosity of the shell starting substance
- viscosity of the filling starting substance.

16. Method according to Claim 15, the shell/filling weight ratio being input additionally as product parameter, and the parameter combination which is input by the operator being evaluated by the article generator, a comparison being carried out with possible parameter combinations and/or impossible parameter combinations.

17. Method according to Claim 15 or 16, **characterized in that**, if an impossible product parameter combination is input, at least one stored possible alternative product parameter combination is displayed, the displayed possible product parameter combination differing from the input impossible combination in as few parameters as possible, or,
in the case of the differing parameters of the impossible and the displayed possible alternative product parameter combinations, the respective difference between the different parameters being as small as possible, or
the deviation of the possible parameter combination which is proposed by the plant from the impossible parameter combination which is proposed by the operator being quantified by the standard deviation between the impossible parameter group and the possible parameter group and then being minimized.

18. Method according to Claim 15, 16 or 17, **characterized in that** the relative positioning and/or moving of the metering unit and the metering location take/takes place in such a way that a nozzle of the metering unit is moved along a predefined track at the stationary metering location.

19. Method according to one of Claims 15 to 18, **characterized in that** the relative positioning and/or moving of the metering unit and the metering location take/takes place in such a way that a nozzle of the metering unit is moved on a predefined track along the stationary surface of a confectionery article.

20. Method according to Claim 16, **characterized in that**, after the input of product parameter combinations and before the assignment of process parameters and/or machine parameters, the input product parameter combination is compared by the comparison unit with stored impossible product parameter combinations in the memory unit and it is displayed to the operator via the display means whether an input product parameter combination is possible or impossible.

21. Method according to one of Claims 15 to 20, **characterized in that** the operator and/or the data processing system decide/decides whether an input or a displayed alternative product parameter combination is acceptable.

22. Method according to one of Claims 15 to 21, for decorating the surface of a confectionery article, **characterized in that** the inputting of the geometric shape of the confectionery article takes place by means of a confectionery-article sensing apparatus, by the confectionery article to be decorated being placed in the said sensing apparatus in order to detect its geometry data, the detected geometry data being stored in the memory unit, and the stored geometry data being used to actuate the positioning means for relatively positioning and/or moving the metering unit and the metering location.

## Revendications

1. Installation pour la fabrication de produits de confiserie à partir d'au moins une masse initiale liquide ou visqueuse ou de masses avec des ingrédients, dans laquelle l'installation comprend:
- une unité d'apport de masse au dosage pour la préparation ou la conservation de la masse,
- une unité de dosage (8) pour l'apport dosé de la masse à un endroit de dosage,
- un moyen de positionnement (4) pour effectuer un positionnement relatif entre l'unité de dosage et l'endroit de dosage,
- un moyen de transport pour l'évacuation de la masse dosée à l'endroit de dosage,
- un système de traitement de données présentant des moyens d'entrée et des moyens d'affichage, avec un moyen de mémoire, un moyen de comparaison et un moyen de calcul de paramètres du procédé, qui peut associer aux paramètres de produit des produits de confiserie à fabriquer, pouvant être introduits par les moyens d'entrée, des paramètres de conduite du procédé de fabrication et/ou des paramètres de machine de l'installation selon un schéma prédéterminé ou calculable; et
- un système de commande présentant des organes de réglage,
**caractérisée en ce que**
le paramètre de produit pouvant être introduit par le moyen d'entrée est choisi dans le groupe composé de
- la densité de la masse initiale de l'enveloppe;
- la densité de la masse initiale de garniture;
- la viscosité de la masse initiale de l'enveloppe;
- la viscosité de la masse initiale de garniture, ainsi que des combinaisons de ceux-ci.

2. Installation selon la revendication 1, **caractérisée en ce qu'**un paramètre de produit supplémentaire, pouvant être introduit par le moyen d'entrée, est le rapport pondéral enveloppe/garniture, et l'installation étant conçue de telle manière que la combinaison de paramètres introduite par l'opérateur soit analysée par le générateur de produits, dans lequel on procède à une comparaison avec des combinaisons possibles de paramètres et/ou des combinaisons impossibles de paramètres.

3. Installation selon la revendication 1 ou 2, **caractérisée en ce que** l'installation est réalisée de telle manière que
- lors de l'introduction d'une combinaison impossible de paramètres de produit, au moins une combinaison alternative possible de paramètres de produit mémorisée est affichée, la combinaison possible de paramètres de produit affichée différant de la combinaison impossible introduite par aussi peu de paramètres que possible, ou
- pour les paramètres différant l'un de l'autre de la combinaison impossible et de la combinaison alternative possible affichée de paramètres de produit, la différence respective entre les paramètres différents est aussi petite que possible, ou
- l'écart entre la combinaison possible de paramètres proposée par l'installation et la combinaison impossible de paramètres proposée par l'opérateur est quantifié par l'écart type entre le groupe de paramètres impossible et le groupe de paramètres possible et est ensuite minimisé.

4. Installation selon la revendication 1 ou 2, **caractérisée en ce que** l'unité de dosage (8) présente une gicleur (83), une unité à piston-cylindre (81) et une soupape (82), dans laquelle le volume du cylindre de l'unité à piston-cylindre est en communication fluide soit avec l'unité de dosage soit avec la gicleur en fonction de la position de la soupape.

5. Installation selon la revendication 1, 2, 3 ou 4, **caractérisée en ce qu'**elle présente un réservoir de masse se trouvant en communication fluide avec l'unité de dosage pour conserver et préparer la masse liquide à visqueuse.

6. Installation selon l'une quelconque des revendications 1 à 5, **caractérisée en ce que** l'endroit de dosage est un endroit de dosage prédéterminé.

7. Installation selon la revendication 6, **caractérisée en ce que** l'endroit de dosage est un moule.

8. Installation selon la revendication 7, **caractérisée en ce que** le moule est une partie de l'emballage du produit de confiserie.

9. Installation selon l'une quelconque des revendications 1 à 4, **caractérisée en ce que** l'endroit de dosage est une unité à moule creux/piston à froid.

10. Installation selon l'une quelconque des revendications 1 à 9, **caractérisée en ce que** le moyen de positionnement présente un moyen pour le déplacement de la gicleur et/ou un moyen pour le déplacement de l'endroit de dosage.

11. Installation selon l'une quelconque des revendications 1 à 10, **caractérisée en ce qu'**un premier organe de réglage est l'entraînement du moyen de positionnement.

12. Installation selon l'une quelconque des revendications 4 à 11, **caractérisée en ce qu'**un deuxième organe de réglage est l'entraînement du piston de l'unité à piston-cylindre.

13. Installation selon l'une quelconque des revendications 4 à 12, **caractérisée en ce qu'**un organe de réglage est l'entraînement de la soupape.

14. Installation selon l'une quelconque des revendications 1 à 13, **caractérisée en ce qu'**elle présente un dispositif de balayage des produits de confiserie pour détecter la forme d'un produit de confiserie placé dans celui-ci, dans laquelle le dispositif de balayage est relié au moyen de mémoire.

15. Procédé pour la fabrication de produits de confiserie à partir d'au moins une masse liquide à visqueuse ou de masses avec des ingrédients, la au moins une masse étant des masses transportables ou coulantes à base de matières grasses, telles que du chocolat noir ou du chocolat au lait, ou des masses coulées de sucre qui peuvent être versées à une température suffisamment élevée ou à une teneur en eau suffisamment élevée et solidifiées par baisse ultérieure de la température ou séchage, en utilisant une installation selon l'une quelconque des revendications 1 à 14, dans lequel:
a. on introduit d'abord des paramètres de produit, qui définissent un produit de confiserie à fabriquer, par des moyens d'entrée d'un système de commande; et
b. on associe aux paramètres de produit des paramètres de conduite du procédé de fabrication de produits de confiserie et/ou des paramètres de machine de l'installation utilisée pour la fabrication selon un schéma prédéterminé ou selon un calcul effectué par le moyen de calcul;
et dans lequel on introduit comme paramètres de produit au moins un ou des combinaisons des paramètres suivants du produit de confiserie:
- la densité de la masse initiale de l'enveloppe;
- la densité de la masse initiale de garniture;
- la viscosité de la masse initiale de l'enveloppe;
- la viscosité de la masse initiale de garniture.

16. Procédé selon la revendication 15, dans lequel on introduit en outre comme paramètre de produit le rapport pondéral enveloppe/garniture et on analyse la combinaison de paramètres introduite par l'opérateur, dans lequel on effectue une comparaison avec des combinaisons possibles de paramètres et/ou des combinaisons impossibles de paramètres.

17. Procédé selon la revendication 15 ou 16, **caractérisé en ce que**
- lors de l'introduction d'une combinaison impossible de paramètres de produit, au moins une combinaison alternative possible de paramètres de produit mémorisée est affichée, la combinaison possible de paramètres de produit affichée différant de la combinaison impossible introduite par aussi peu de paramètres que possible, ou
- pour les paramètres différant l'un de l'autre de la combinaison impossible et de la combinaison alternative possible affichée de paramètres de produit, la différence respective entre les paramètres différents est aussi petite que possible, ou
- l'écart entre la combinaison possible de paramètres proposée par l'installation et la combinaison impossible de paramètres proposée par l'opérateur est quantifié par l'écart type entre le groupe de paramètres impossible et le groupe de paramètres possible et est ensuite minimisé.

18. Procédé selon la revendication 15, 16 ou 17, **caractérisé en ce que** l'on effectue le positionnement et/ou le déplacement relatif de l'unité de dosage et de l'endroit de dosage de telle manière qu'une gicleur de l'unité de dosage soit déplacée à l'endroit de dosage immobile le long d'une trajectoire prédéterminée.

19. Procédé selon l'une quelconque des revendications 15 à 18, **caractérisé en ce que** l'on effectue le positionnement et/ou le déplacement relatif de l'unité de dosage et de l'endroit de dosage de telle manière qu'une gicleur de l'unité de dosage soit déplacée sur une trajectoire prédéterminée le long de la surface immobile d'un produit de confiserie.

20. Procédé selon la revendication 16, **caractérisé en ce que**, après l'introduction de combinaisons de paramètres de produit et avant l'association de paramètres de conduite et/ou de paramètres de machine, on compare, à l'aide du moyen de comparaison, la combinaison de paramètres de produit introduite avec des combinaisons impossibles de paramètres de produit dans le moyen de mémoire et on indique à l'opérateur, à l'aide du moyen d'affichage, si une combinaison de paramètres de produit introduite est possible ou impossible.

21. Procédé selon l'une quelconque des revendications 15 à 20, **caractérisé en ce que** l'opérateur et/ou le système de traitement de données décide si une combinaison de paramètres de produit introduite ou une combinaison alternative de paramètres de produit affichée est acceptable.

22. Procédé selon l'une quelconque des revendications 15 à 21, pour la décoration de la surface d'un produit de confiserie, **caractérisé en ce que** l'on effectue l'introduction de la forme géométrique du produit de confiserie au moyen d'un dispositif de balayage des produits de confiserie, dans lequel on place dans ledit dispositif de balayage le produit de confiserie à décorer afin de détecter ses données géométriques, on mémorise les données géométriques détectées dans le moyen de mémoire, et on utilise les données géométriques mémorisées pour commander le moyen de positionnement en vue du positionnement et/ou du déplacement relatif de l'unité de dosage et de l'endroit de dosage.
